# EUROPÄISCHE PATENTSCHRIFT

(11) **EP 2 638 307 B1**
(45) Veröffentlichungstag und Bekanntmachung des Hinweises auf die Patenterteilung: **08.04.2015**
(21) Anmeldenummer: 11782554.7
(22) Anmeldetag: 09.11.2011
(51) Int. Cl.: B21D 53/00, F16J 1/00, F16J 1/09, F16F 9/34, F16F 9/36, F16F 9/32

(54) **HERSTELLUNG MEHRTELLIGER, GEFÜGTER VENTILBAUTEILE IN HYDRAULISCHEN ANWENDUNGEN MIT FÜGEDICHTPROFILEN**
PRODUCTION OF MULTI-PART, JOINED VALVE COMPONENTS IN HYDRAULIC APPLICATIONS WITH JOINT SEALING PROFILES
FABRICATION D'ÉLÉMENTS DE SOUPAPES EN PLUSIEURS PIÈCES, ASSEMBLÉES, DANS DES APPLICATIONS HYDRAULIQUES UTILISANT DES PROFILÉS D'ÉTANCHÉITÉ DE JOINTS

(30) Priorität: 09.11.2010 DE 102010050868
(43) Veröffentlichungstag der Anmeldung: 18.09.2013
(73) Patentinhaber: GKN Sinter Metals Holding GmbH, 42477 Radevormwald (DE)
(72) Erfinder: FREY, Sascha, 53844 Troisdorf (DE); GRUBER,Rainer, 53343 Wachtberg (DE)
(74) Vertreter: Von Kreisler Selting Werner - Partnerschaft von Patentanwälten und Rechtsanwälten mbB
(86) Internationale Anmeldenummer: PCT/EP2011/005633
(87) Internationale Veröffentlichungsnummer: WO 2012/062466

(56) Entgegenhaltungen:
- EP-A1- 0 505 773
- EP-A1- 0 557 548
- DE-A1- 3 701 557
- DE-C1- 10 013 638
- DE-U1- 8 301 451
- JP-A- 11 037 202

## Beschreibung

Die Erfindung betrifft ein Ventilbauteil, Insbesondere für einen Kolben oder ein Ventil, umfassend mindestens ein erstes scheibenförmiges Fügeteil und mindestens ein zweites scheibenförmiges Fügeteil, wobei das erste und zweite Fügeteil mindestens jeweils eine Öffnung aufweist, und wobei nach einem Fügen der Fügeteile die Öffnungen der Fügeteile derart zusammenwirken, dass ein Kanal gebildet ist und ein fluides Mittel, insbesondere ein Öl, durch den Kanal hindurch strömbar ist. Darüber hinaus betrifft die Erfindung ein Verfahren zur Herstellung eines Ventilbauteils.

Derartige Ventilbauteile sind beispielsweise als Kolben für Stoßdämpfer bekannt. Ein Stoßdämpferkolben ist in der DE 37 01 557 A1 beschrieben. Der aus zwei Kolbenhälften gebildete Stoßdämpferkolben weist umfangsseitig an den aneinander anliegenden Stirnflächen einen Rücksprung auf, der eine umlaufende Nut bildet. In diese Nut ist ein Kolbenring eingefügt. In jeder Kolbenhälfte ist ein Flüssigkeitsdurchtrittskanal eingeformt, so dass beim Zusammenfügen der Kolbenhälften ein Stoßdämpferkolben gebildet Ist, der einen Durchströmkanal aufweist. Die Kolbenhälften sind identisch ausgebildet und werden mittels Tellerfedern und Stützscheiben an einem Kolbenstangenende befestigt.

Aus der DE 100 13 638 C1 ist ein weiteres Ventilbauteil in Form eines Stoßdämpferkolbens bekannt. Der hierin gezeigte Stoßdämpferkolben ist über eine zentrische Bohrung mit einer Kolbenstange verbindbar. Zur Abdichtung des Kolbens gegenüber einer Zylinderwand weist der Stoßdämpferkolben eine umfängliche Nut auf, in die ein Kolbenring eingelegt ist. Zur Abdichtung besteht der Kolbenring aus einem geeigneten Kunststoff. In eine weitere Nut im Bereich der Trennungsebene zwischen dem den Stoßdämpferkolben bildenden Kolbenhälften ist ein als O-Ring ausgebildeter Stützring aufgenommen. Der Stützring besteht aus einem elastisch nachgiebigem Material, der mittels des Kolbenrings in der Nut verquetscht wird. Bildet der Kolbenring eine Dichtung in Richtung des Zylinders, so dient der Stützring zur Abdichtung und zum Toleranzausgleich zwischen den Kolbenhälften. Die Kolbenhälften weisen eine Identische Form auf, wobei in die Kolbenhälften Vorsprünge und Rücksprünge eingearbeitet sind, so dass ein sicheres und lagerichtiges Fügen der Kolbenhälften ermöglicht wird.

Aus der EP 0 505 773 A1 ist die Verwendung eines Ventilbauteils in einem Einrohrstoßdämpfer bekannt. Das Ventilbauteil wird durch Fügen aus mindestens zwei Teilen zusammengesetzt. Die beiden Teile werden formschlüssig miteinander verbunden und die die flüssigkeitsführenden Teile werden gegen Leckage abgedichtet.

Aus der EP 0 557 548 A1 ist ein Stoßdämpferkolben bekannt, der aus zwei Kolbenhälften oder aus zwei Kolbenhälften und einer in der Mitte angeordneten Hülse, die fest miteinander verbunden sind, besteht. Bei dem Stoßdämpferkolben befinden sich die ringkammerseitigen Bohrungen für die Aufnahme der Kolbenstange nicht in einer Hülse. Weiterhin liegen bei dem Stoßdämpferkolben liegen die ringförmigen Auflagen für die Ventilfederscheiben, welche sich ringförmig um die Kolbenstangen befinden, stets genau auf Höhe der Ebene der Ringkommerböden.

Der Erfindung liegt die Aufgabe zugrunde, ein gefügtes Ventilbauteil bereitzustellen, bei dem eine hohe Dichtigkeit zwischen den gefügten Teilen erzielt wird. Insbesondere besteht die Aufgabe darin, die in dem Ventilbauteil ausgebildeten Durchströmungskanäle optimal gegeneinander abzudichten. Darüber hinaus ist es eine Aufgabe der Erfindung, eine konstruktiv einfache und kostengünstige Lösung für ein dichtendes Ventilbauteil zu ermöglichen. Aufgabe der Erfindung ist es ebenfalls, ein Verfahren zur Herstellung eines abdichtenden Ventilbauteils bereitzustellen.

Diese Aufgabe wird mit einem Ventilbauteil mit den Merkmalen des Patentanspruches 1 sowie mit einem Verfahren mit den Merkmalen des Patentanspruches 17 gelöst. Vorteilhafte weitere Ausgestaltungen und Merkmale gehen aus den jeweiligen Unteransprüchen hervor. Die dort hervorgehenden Merkmale sind jedoch nicht auf die einzelnen Unteransprüche beschränkt, sondern können mit anderen Merkmalen aus anderen Unteransprüchen, wie auch aus der nachfolgenden Beschreibung, zu weiteren Ausgestaltungen verknüpft werden.

Ein Ventilbauteil, dass die gestellte Aufgabe löst, ist ein Ventilbauteil, insbesondere für einen Kolben oder ein Ventil, umfassend mindestens ein erstes scheibenförmiges Fügeteil und mindestens ein zweites scheibenförmiges Fügeteil, wobei das erste und zweite Fügeteil mindestens jeweils eine Öffnung aufweist, und wobei nach einem Fügen der Fügeteile die Öffnungen der Fügeteile derart zusammenwirken, dass ein Kanal, insbesondere ein Durchströmkanal, gebildet ist und ein fluides Mittel, insbesondere ein Öl, durch den Kanal hindurch strömbar ist, wobei in einem ersten Bereich des ersten Fügeteils eine zumindest teilweise umlaufende Erhöhung und/oder Vertiefung und einem dem ersten Bereich gegenüberliegenden zweiten Bereich des zweiten Fügeteils eine zumindest teilweise umlaufende Erhöhung und/oder Vertiefung vorgesehen ist, wobei die Erhöhung und/oder die Vertiefung nach dem Fügen der Fügeteile abdichtend zusammenwirken. Durch die erfindungsgemäße Ausgestaltung des Ventilbauteils ist nun die Möglichkeit geschaffen, die Fügeteile, die das Ventilbauteil bilden, gegeneinander abzudichten. Als Erhöhung oder Erhöhungen werden dabei Bereiche auf den Fügeteilen angesehen, die sich von einer beispielsweise mittig angeordneten Trennebene des Ventilbauteils in Richtung des weiteren Fügeteils erstrecken. Vorzugesweise liegt die Trennebene in einer vertikalen Mitte des Ventilbauteils. Wird hierbei beispielsweise angenommen, dass das Ventilbauteil ein Kolben und insbesondere ein Stoßdämpferkolben ist und der Stoßdämpferkolben eine mittige Durchgangsbohrung aufweist, durch die eine Kolbenstange hindurchführbar ist, so kann in einer vertikalen Mitte der Durchgangsbohrung eine Trennungsebene liegen. Werden Erhöhungen als sich in positive Richtung von einer Trennungsebene erstreckende Materialanhäufungen bezeichnet, so werden Vertiefungen durch sich in negative Richtung von einer Trennungsebene erstreckende Ausnehmungen definiert. Durch ein Zusammenspiel von Bereichen, mit zum Beispiel Erhöhungen in einem ersten Fügeteil mit Vertiefungen in einem zweiten Fügeteil kann ein Dichtprofil zwischen und mit den Fügeteilen gebildet werden. Die Fügeteile weisen dabei jeweils mindestens eine Öffnung auf, wobei die in den Fügeteilen vorhandenen Öffnungen derart kooperieren, dass ein Durchgangskanal oder Kanal durch das Ventilbauteil hindurch gebildet ist. So ist es beispielsweise möglich, dass das Ventilbauteil in einem Zylinder angeordnet ist, und dass mittels des Durchgangskanals ein Fluid von einer Seite des Ventilbauteils zur anderen Seite des Ventilbauteils strömen kann. Die kooperierenden Vertiefungen und/oder Erhöhungen in den Fügeteilen des Ventilbauteils bilden eine Dichtung der durch die Öffnungen gebildeten Kanäle. Die Erhöhungen und/oder Vertiefungen können dabei als teilweise umlaufende Erhöhungen und/oder Vertiefungen oder als vollständig eine Öffnung umschließende Erhöhung und/oder Vertiefung, das heißt Dichtung, ausgebildet sein.

In einer weiteren Ausgestaltungsvariante ist in einem ersten Bereich der Öffnung des ersten Fügeteils eine die Öffnung zumindest teilweise umlaufende Erhöhung und/oder Vertiefung und in einem dem ersten Bereich gegenüberliegenden zweiten Bereich des zweiten Fügeteils eine die Öffnung zumindest teilweise umlaufende Erhebung und/oder Vertiefung vorgesehen, so dass die Erhöhung und/oder die Vertiefung nach dem Fügen der Fügeteile abdichtend zusammenwirken. Hierbei kann die Vertiefung und/oder Erhöhung unmittelbar an der Öffnung oder beabstandet zur Öffnung in den Fügeteilen angeordnet sein. Die den Kanal bildende Öffnung kann dabei unmittelbar abgedichtet werden, so dass kein Fluid in zum Beispiel eine Trennungsebene zwischen den Fügeteilen eindringen kann. Die Vertiefungen und/oder Erhöhungen bilden dabei insbesondere bei einer Beabstandung von der Öffnung eine labyrinthartige Dichtung. Vorstellbar ist es aber auch, dass lediglich eine äußere Umfangsfläche des scheibenförmigen Ventilbauteils mit Erhöhungen und/oder Vertiefungen versehen ist. Eine Abdichtung erfolgt dann vorzugsweise in radialer Richtung. Je nach Anzahl und Größe der Öffnungen ist eine einzige umlaufende und/oder eine um die Öffnungen herumreichende Dichtung aus Erhöhungen und/oder Vertiefungen ausbildbar. Mittels der Erhöhungen und/oder Vertiefungen wird ein Dichtprofil gebildet, dass gleichzeitig als Füge- und Fixierprofil zwischen den Fügeteilen dienen kann.

Eine weitere vorteilhafte Ausgestaltungsform der Erfindung ergibt sich dann, wenn mindestens zwei Öffnungen zur Bildung von mindestens zwei Kanälen am Fügeteil, beziehungsweise Ventilbauteil, ausgebildet sind und jedes Fügeteil Erhöhungen und/oder Vertiefungen aufweist. Die Anzahl der Öffnungen im Ventilbauteil kann je nach Ausführungsform und Einsatzzweck des Ventilbauteils variieren. So sind Ventilbauteile mit einer, zwei, drei, vier oder mehr Öffnungen ausbildbar, wobei eine aus Vertiefungen und/oder Erhöhungen gebildete Dichtung an jedem durch die Öffnungen gebildeten Kanal ausgebildet sein kann.

Vorteilhaft kann es ebenfalls sein und eine Ausführungsform der Erfindung beschreiben, wenn die Erhöhungen und/oder Vertiefungen alternierend im Fügeteil vorliegen. Bei einer alternierenden und/oder symmetrischen Anordnung von Vertiefungen und/oder Erhöhungen in den Fügeteilen ergibt sich eine leichte Fügbarkeit der Fügeteile und insbesondere bei symmetrisch angeordneten Erhöhungen und/oder Vertiefungen können sich identische Fügeteile für ein Ventilbauteil ergeben. Als alternierend ist es dabei vorstellbar, dass beispielsweise sechs Öffnungen in einem Fügeteil vorhanden sind, und dass umlaufend um jede Öffnung einerseits eine Erhöhung und andererseits eine Vertiefung am Fügeteil ausgebildet ist. So kann beispielsweise abwechselnd eine Vertiefung um eine Öffnung und eine Erhöhung an einer nächsten Öffnung ausgebildet sein. Bei einer geraden Anzahl von Öffnungen ergibt sich dann eine leichte Fügbarkeit und bei einer ungeraden Anzahl von Öffnungen eine eindeutige Positionierung der Fügeteile beim Zusammenfügen des Ventilbauteils. Auch ist es vorstellbar, alternierend Erhöhungen und Vertiefungen um eine Öffnung herum anzuordnen, so dass sich ineinandergreifende Profilierungen als Fügeprofile ergeben.

Weiterhin können die Erhöhungen und/oder Vertiefungen unmittelbar um die Öffnung herum im Fügeteil angeordnet sein. Eine unmittelbare Anordnung der Profile in Form von Erhöhungen und/oder Vertiefungen um die Öffnung herum bietet den Vorteil, dass eine kostengünstige Herstellung gewährleistet wird, da In diesem Fall die Öffnung selbst ein Teil der ineinandergreifenden Profile aus Erhebungen und/oder Vertiefungen bilden kann.

Die Öffnungen können eine runde und/oder eckige und/oder ovale Querschnittsform aufweisen. Diese Aufzählung ist aber nicht beschränkend gemeint, sondern stellen lediglich Ausführungsformen dar, wobei die Öffnungen eine den Anforderungen entsprechende beliebige geometrische Querschnittsform aufweisen können. Insbesondere können die Öffnungen auch sich verjüngend oder erweiternd und verjüngend oder mit konstantem Öffnungsquerschnitt ausgebildet sein. Bevorzugt werden als Querschnittsformen runde oder eckige Querschnitte als Öffnungen Im Ventilbauteil ausgebildet. Auch können die Öffnungen sich linear oder in Kurvenform durch das Ventilbauteil hindurch erstrecken. Je nach Anforderung an das strömende Fluid durch die Öffnungen ist es vorstellbar, eine beliebige Anzahl, Querschnittsform und Ausbildung der Dichtungen am Ventilbauteil auszubilden. So ist es beispielsweise vorstellbar, eine oder wenige große Öffnungen auszubilden, um einen hohen Fluidstrom durch das Ventilbauteil zu ermöglichen oder eine oder wenige oder viele kleine Öffnungen im Ventilbauteil auszubilden, um einen Fluidstrom durch das Ventilbauteil hindurch möglichst zu hemmen oder zu reduzieren.

In einer weiteren Ausführungsform bilden die gefügten scheibenförmigen Fügeteile in einem gefügten Zustand an einer radial äußeren Oberfläche mindestens eine, insbesondere durch beide Fügeteile gebildete, umfängliche Nut auf, wobei die Erhebungen und/oder Vertiefungen in einem an die Nut angrenzenden Bereich und umlaufend angeordnet sind, so dass die Nut gegen den mindestens einen Durchströmkanal abgedichtet ist. Insbesondere dann, wenn das Ventilbauteil in einer axialen Richtung verschiebbar eingesetzt wird, bildet eine äußere umfängliche Nut am Ventilbauteil eine Aufnahme für einen Dichtring, wie beispielsweise einen Kolbenring. Wirkt der Kolbenring gegen beispielsweise einen Zylinder, so bildet der Kolbenring eine Dichtung für das axial bewegte Ventilbauteil. Neben dem Kolbenring wirken die Erhöhungen und oder Vertiefungen in den Fügeflächen des Ventilbauteils als zusätzliche Dichtungen gegen einen Leckagestrom in Richtung der Fügeflächen der Fügeteile.

Das Ventilbauteil bietet somit den Vorteil, dass ein Leckagestrom entlang der Trennungsebene oder Fügefläche der Fügeteile verhindert wird. Ist eine umfängliche Nut in einer Ausführungsform, insbesondere bei einer axialen Verschiebung des Ventilbauteils vorteilhaft, so bilden eine oder mehrere axiale Nuten eine weitere Möglichkeit zur Führung und/oder Abdichtung des Ventilbauteils, zur Erzielung einer gerichteten Fluidmittelströmung. Axial bedeutet hierbei, dass die Nuten in Richtung einer Mittelachse des scheibenförmig ausgebildeten Ventilbauteils ausgerichtet sind. Neben der Ausbildung einzelner oder mehrerer axialer Nuten am äußeren Umfang des Ventilbauteils besteht auch die Möglichkeit, eine oder mehrere axial versetzte Nuten in die zu fügenden Teile einzuformen.

Die Erhöhungen und/oder Vertiefungen erstrecken sich ausgehend von einer Trennungsebene oder Fügefläche in positive oder negative axiale Richtung des scheibenförmigen Ventilbauteils. Hierbei weisen die Erhöhungen und/oder Vertiefungen eine Erstreckung von 0,5 mm bis 2 mm, vorzugsweise etwa 1 mm, auf. Eine Erstreckung in einem Bereich zwischen 0,5 mm und 2 mm bietet einerseits den Vorteil einer leichten Positionierung der Fügeteile zueinander und andererseits den Vorteil einer kostengünstigen Herstellung der Vertiefungen und Erhöhungen in den Fügeteilen. Darüber hinaus wird mit den Erhöhungen und Vertiefungen in den genannten Erstreckungsbereichen eine optimale Dichtwirkung zwischen den zufügenden Teilen in der Fügefläche erreicht.

Die Erhöhungen und/oder Vertiefungen können mittels eines spanenden oder spanlosen Verfahrens hergestellt worden sein, das heißt in das Ventilbauteil eingeformt sein. Spanende oder spanlose Verfahren bieten den Vorteil der kostengünstigen Herstellung und Reproduzierbarkeit. Darüber hinaus bietet ein derartig ausgebildetes Ventilbauteil den Vorteil, dass die Halbzeuge zur Herstellung der Formteile identisch ausgebildet sein können, was sich wiederum positiv auf die Herstellungskosten auswirkt.

In einer weiteren vorteilhaften Ausgestaltungsvariante der Erfindung, sind die Fügeteil symmetrisch oder asymmetrisch ausgebildet. Auch eine symmetrische Ausbildung der Fügeteile kann vorteilhaft sein, wenn zum Beispiel große Stückzahlen an Ventilbauteilen gefordert werden, da hierbei zum Beispiel identische Bauteile gefügt werden können. Eine asymmetrische Ausbildung der Fügeteile bietet hingegen den Vorteil, dass stets eine eindeutige Zuordnung, das heißt eine eindeutige Ausrichtung und Orientierung der Fügeteile zueinander bestimmbar ist.

Es zeigt:
- Fig. 1: eine dreidimensionale Ansicht auf ein zusammengefügtes Ventilbauteil und eine Schnittdarstellung in einer Seitenansicht,
- Fig. 2: eine weitere Ausführungsform eines Ventilbauteils in einer dreidimensionalen Ansicht und in einer Schnittdarstellung in der Seitenansicht,
- Fig. 3: ein Fügeteil eines Ventilbauteils in einer dreidimensionalen Ansicht mit Vertiefungen und Erhöhungen in der Fügefläche und eine Schnittdarstellung in der Seitenansicht,
- Fig. 4: eine dreidimensionale Ansicht auf eine weitere Ausgestaltungsform eines symmetrischen Fügeteils in einer dreidimensionalen Ansicht und in einer Schnittdarstellung in der Seitenansicht,
- Fig. 5: eine dreidimensionale Ansicht auf ein Fügeteil mit umlaufenden Erhebungen und Vertiefungen sowie eine Seitenansicht in einer Schnittdarstellung eines gefügten Fügeteils sowie eine weitere Seitenansicht des Fügeteils in einer Schnittdarstellung,
- Fig. 6: eine weitere Ausführungsform in einer dreidimensionalen Ansicht mit Vertiefungen und Erhöhungen entlang der Öffnung und eine Seitenansicht in einer Schnittdarstellung,
- Fig. 7: einer weiteren Ausgestaltungsform eines Ventilbauteils in einer dreidimensionalen zusammengefügten Ansicht,
- Fig. 8: eine dreidimensionale Ansicht auf eine Ausgestaltungsform mit axialen Nuten in einer dreidimensionalen Ansicht und
- Fig. 9: eine weitere alternative Ausgestaltungsform eines Ventilbauteils in einer dreidimensionalen Ansicht mit axial versetzten Nuten am Umfang des Ventilbauteils.

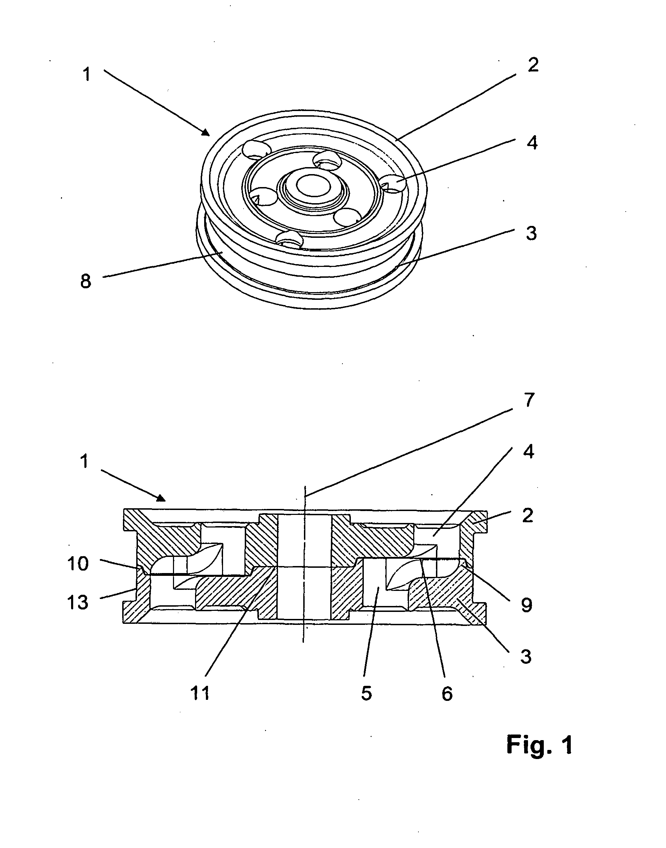

In der Fig. 1 ist in der oberen Darstellung eine dreidimensionale Ansicht auf ein Ventilbauteil 1 und in der unteren Ansicht ein Schnitt durch das Ventilbauteil 1 in einer Seitenansicht wiedergegeben. Das Ventilbauteil 1 ist beispielhaft als ein Teil eines Stoßdämpferkolbens dargestellt. Das Ventilbauteil ist aus einem ersten Fügeteil 2 und einem zweiten Fügeteil 3 gebildet. In die Fügeteile 2, 3 sind sechs Öffnungen 4, 5 eingeformt, die zusammen einen Kanal bzw. Flüssigkeitsdurchtrittskanal 6 bilden. Zur leichteren Übersichtlichkeit der Fig. 1 Ist lediglich ein Durchtrittskanal 6 bzw. die Öffnungen 4, 5 mit Bezugszeichen versehen. Die Fügeteile 2, 3 sind symmetrisch aufgebaut und weisen eine Durchtrittsöffnung 7 in Form eines zylindrischen Hohlraums oder einer Bohrung auf. Durch die Bohrung 7 hindurch ist das Ventilbauteil beispielsweise mit einer Kolbenstange verbindbar. Umfänglich weist das Ventilbauteil eine Nut 8 auf, in die beispielsweise ein Kolbenring zur Abdichtung gegen einen Zylinder einsetzbar ist. Zur Abdichtung des Kanals 6 sind umfänglich Erhöhungen 9 und Vertiefungen 10 angeordnet. Die Erhöhungen 9 und Vertiefungen 10 sind hierbei unmittelbar am Rand der Öffnungen 4, 5 ausgebildet, so dass die Erhöhungen 9 und Vertiefungen 10 einen Teil des Dichtungsprofils bilden. Die Erhöhungen 9 und Vertiefungen 10 erstrecken sich ausgehend von einer Fügefläche 11 in positive und negative Richtungen.

Ein erfindungsgemäßes Ventilbauteil 1 ist beispielsweise durch die Bohrung 7 hindurch mit einer Kolbenstange verbindbar. Mittels zusätzlicher Ventilfederscheiben, die auch als Federbleche bezeichenbar sind, sind die inneren Einströmöffnungen 5 abdeckbar und abdichtbar. Mittels einer entsprechenden Auslegung der Ventilfederscheiben können dann die Flüssigkeitsdurchtrittskanäle 6 für die Einstellung jeder Dämpfungskennlinie, ob vorzugsweise linear, progressiv oder degressiv ausgelegt werden. Darüber hinaus besteht die Möglichkeit, unterschiedliche Dämpfungscharakteristika für eine Zug- und für eine Druckseite mit Hilfe entsprechend geformter Flüssigkeitsdurchtrittskanäle 6 geschaffen werden. Mit anderen Worten kann die Dämpfungswirkung und die Dämpfungscharakteristik des Stoßdämpfers durch die Form der Flüssigkeitsdurchtrittskanäle 6 und die Einstellung und Art der Ventilfederscheiben eingestellt werden. Mittels der Ventilfederscheiben werden die in Bezug auf die Bohrung 7 innen liegenden Austrittsöffnungen 5 abgedichtet. Bei einer entsprechenden Bewegungsrichtung kann dann eine Flüssigkeit, wie beispielsweise ein Hydrauliköl, von der Einströmöffnung 4 durch den Flüssigkeitsdurchtrittskanal 6 und die Austrittsöffnung 5 strömen, wobei die Ventilfederscheibe die Austrittsöffnung 5 freigibt. Das Hydrauliköl fließt hierbei von der Einströmöffnung 4 durch den Flüssigkeitsdurchtrittskanal 6 zur Ausströmöffnung 5, wenn sich beispielsweise das Ventilbauteil 1 aus der Fig. 1 nach oben bewegt. Ein Ölfluss kann hierbei von vordefinierbaren Druckverhältnissen abhängig gemacht werden.

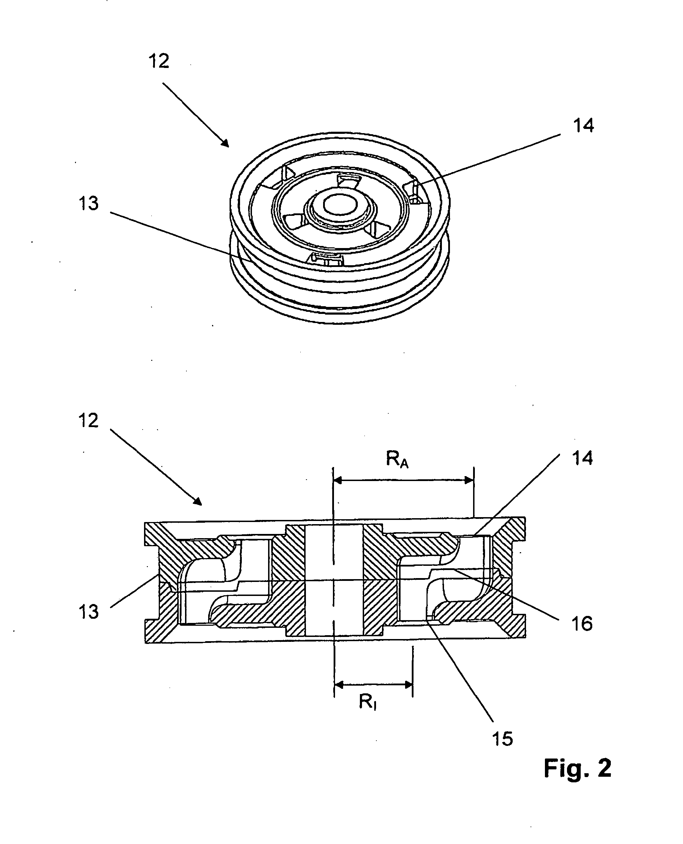

In der Fig. 2 ist in der oberen Ansicht eine dreidimensionale Ansicht auf ein weiteres Ventilbauteil 12 in einer dreidimensionalen Ansicht und in der unteren Darstellung in einem Schnitt in einer Seitenansicht dargestellt. Das Ventilbauteil ist wiederum beispielhaft als Teil eines Stoßdämpferkolbens ausgebildet und besitzt umfänglich eine Nut 13 zur Aufnahme eines nicht dargestellten Dicht- oder Kolbenrings. Das Ventilbauteil 12 weist als rechteckig beschreibbare Öffnungen 14, 15 auf, die einen Kanal 16 bilden. Der Durchtrittskanal 16 dient zur Förderung eines fluiden Mittels durch das Ventilbauteil zum Beispiel von der Öffnung 15 zur Öffnung 14. In das Ventilbauteil 12 sind sechs Kanäle 16 eingeformt oder eingearbeitet, wobei sich die Kanäle 16 von einem inneren Radius R_{I} zu einem äußeren Radius R_{A} hin durch das Ventilbauteil 12 erstrecken. Dabei liegt die Öffnung 14 auf einem äußeren Radius R_{A}, der größer ist als der innere Radius R_{I}, der dem Mittelpunkt der Öffnung15 beschreibt. Durch die Lage und Führung des Kanals durch das Ventilbauteil 12 ist die Strömung des fluiden Mittels, das insbesondere ein Öl sein kann, beeinflussbar.

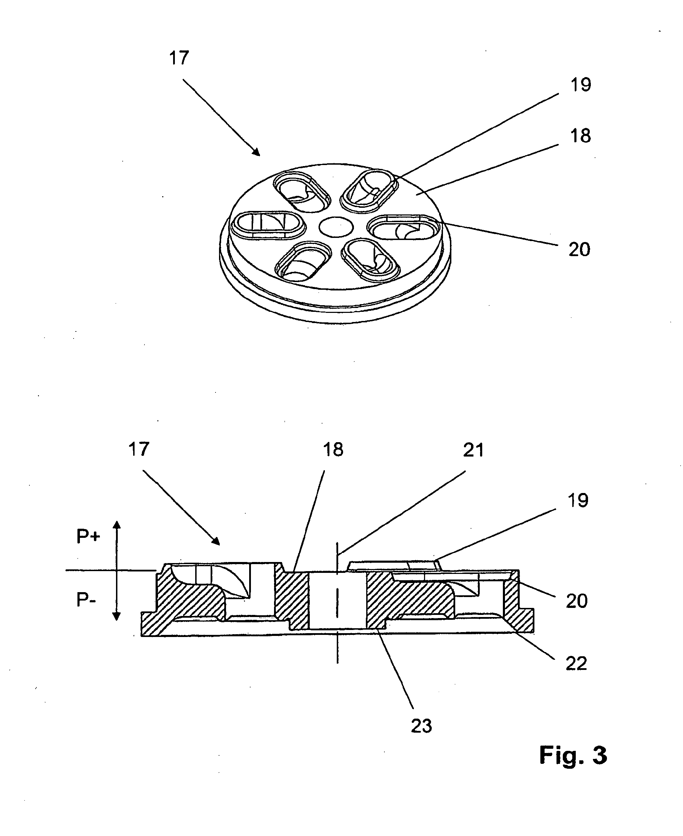

In der Fig. 3 ist in der oberen Darstellung eine dreidimensionale Ansicht auf ein Fügeteil 17 und in der unteren Ansicht einen Schnitt in einer Seitenansicht des Fügeteils 17 dargestellt. Ausgehend von einer Fügefläche 18 erstrecken sich Erhebungen 19 und Vertiefungen 20 in positive und negative axiale Richtung (P+, P-) entlang einer Mittelachse 21 des scheibenförmigen Fügeteils 17. Als axiale Richtung wird dabei eine Richtung entlang der Mittelachse 21 des Fügeteils 17 bezeichnet. Wie in der unteren Ansicht der Fig. 3 deutlich zu erkennen ist, erstrecken sich die Erhebungen 19 ausgehend von der Füge- oder Trennfläche 18 in positive Richtung entlang der Mittelachse 21. Die Vertiefungen 20 hingegen erstrecken sich in negative Richtung entlang der Mittelachse 21, wie dies auch mit den Pfeilen P+ und P- dargestellt ist. Eine bevorzugte Erstreckung der Erhebungen 19 und Vertiefungen 20 liegt dabei im Bereich von 1 mm.

Das Fügeteil 17 ist symmetrisch aufgebaut und weist abwechselnd bzw. alternierend Erhöhungen 19 und Vertiefungen 20 auf. Die Oberflächen 22, 23 können zur Aufnahme weitere Bauteile wie beispielsweise Tellerfedern, Ventilfederscheiben oder Schutzscheiben dienen.

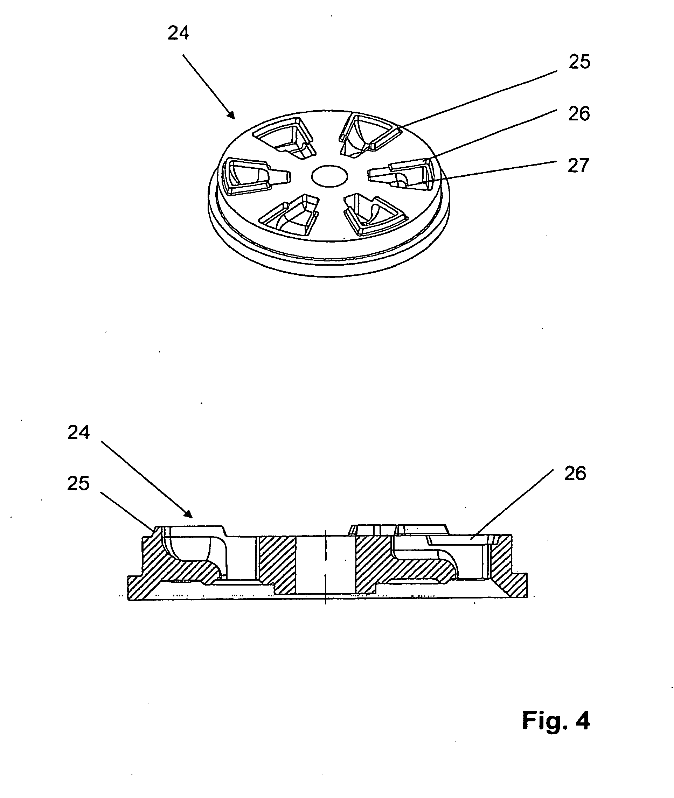

In der Fig. 4 zeigt die Seitenansicht eine weitere Ausgestaltungsform eines Fügeteils 24 und in der unteren Darstellung ein Schnitt durch das Fügeteil 24 in einer Seitenansicht wiedergegeben. Dargestellt ist eine Ausführungsform eines Fügeteils 24, bei dem die Erhöhungen 25 und Vertiefungen 26 teilweise umlaufend ausgebildet sind. Das Fügeteil 24 ist wiederum symmetrisch aufgebaut und besitzt eine gerade Anzahl von Öffnungen 27, so dass identische Fügeteile 24 zur Bildung eines Ventilbauteils zusammen fügbar sind.

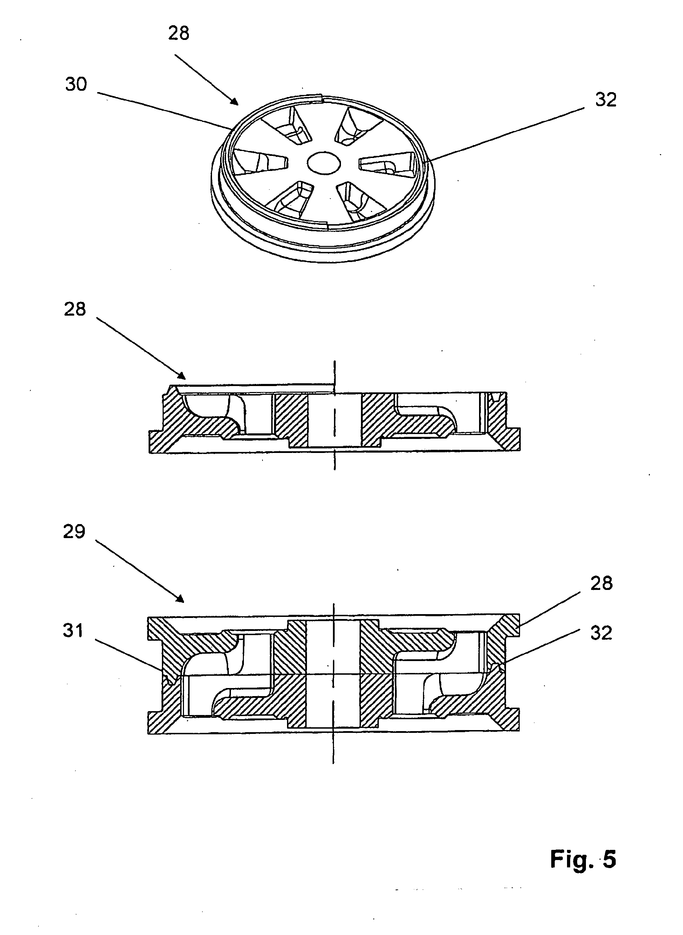

In der Fig. 5 zeigt in der oberen Abbildung eine Ansicht auf eine weitere Ausführungsform eines Fügeteils 28, in der mittleren Abbildung einen Schnitt durch das Fügeteil 28 in einer Seitenansicht und in der unteren Abbildung ein zusammengefügtes Fügebauteil 29, das aus zwei identischen Fügeteilen 28 gebildet ist. Die Erhebung 30 am Fügebauteil 28 ist beabstandet von einer äußeren Nut 31 in das Fügeteil 28 eingebracht und erstreckt sich entlang eines radial äußeren Umfangs des Fügeteils 28. Die Erstreckung der Erhebung 30 erstreckt sich über den halben Umfang des Fügeteils 28, so dass zwei identische Fügeteile 28 zu einem Ventilbauteil zusammenfügbar sind. Die Vertiefung 32 ist entsprechend ebenfalls von der Nut 31 beabstandet in das Fügeteil 21 eingebracht.

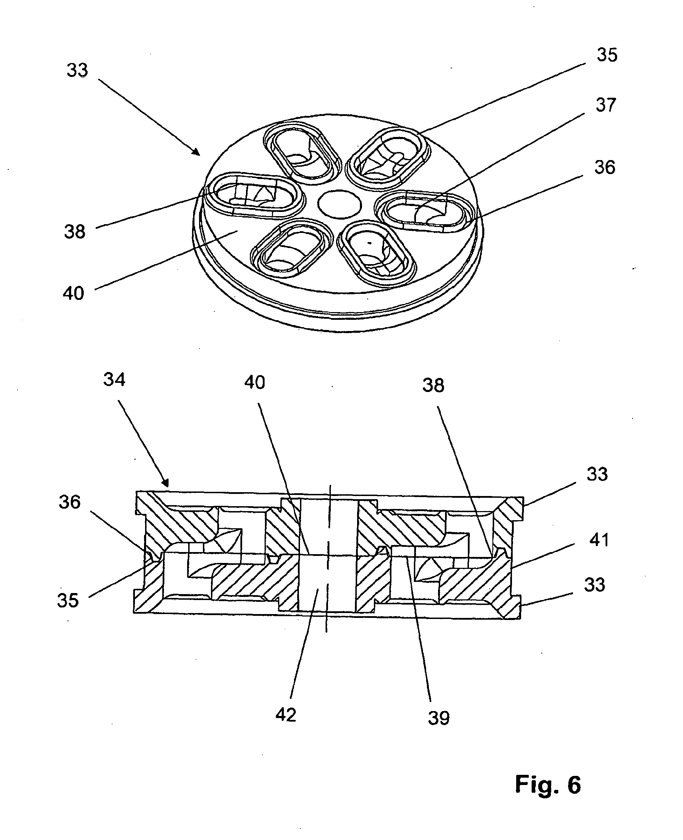

In der oberen Darstellung der Fig. 6 ist eine weitere alternative Ausführungsform eines Fügeteils 33 in einer dreidimensionalen Darstellung und in der unteren Ansicht als zusammengefügtes Ventilbauteil 34 in einem Schnitt und in einer Seitenansicht dargestellt. Die Erhebungen 35 und Vertiefungen 36 erstrecken sich vollumfänglich entlang der Öffnungen 37, wobei die Erhebungen 35 und Vertiefungen 36 vom Rand 38 der Öffnung 37 beabstandet in das Fügeteil 33 eingebracht sind. Vorzugsweise wird das Fügeteil 33 spanlos und/oder spanend und/oder mittels eines pulvermetallurgischen Verfahrens, insbesondere eines Sinterverfahrens, hergestellt. Wie deutlich in der Schnittdarstellung zu erkennen, bilden die Erhöhungen 35 und Vertiefungen 36 eine Dichtung, so dass ein durch den Kanal 39 geführtes fluides Mittel nicht in die Fügefläche zwischen den Fügeteilen 33 gelangen kann. Somit werden Leckageströme in Richtung der Nut 41, der Fügefläche 40 und der Bohrung 42 verhindert. Bevorzugt sind die Fügeteile Sinterteile. Sinterteile bieten den Vorteil einer hohen Bauteilgenauigkeit bei geringst möglicher Nacharbeit.

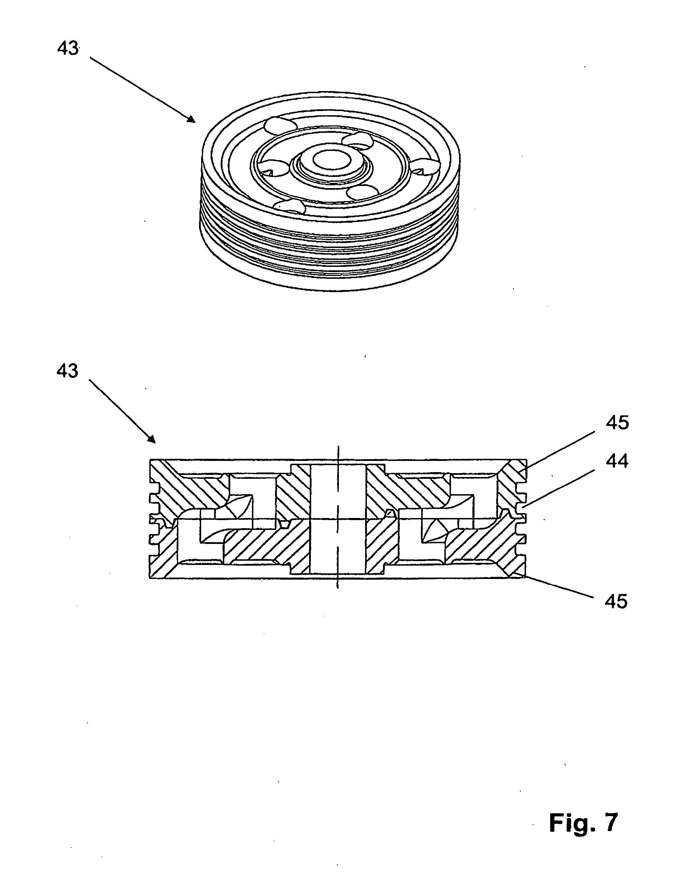

In der Fig. 7 ist in der oberen Darstellung eine weitere alternative Ausführungsform eines Ventilbauteils 43 in einer dreidimensionalen Darstellung und in der unteren Abbildung in einem Querschnitt in einer Seitenansicht darstellt. Das Ventilbauteil weist eine Vielzahl von Nuten 44 auf, die es ermöglichen, entweder eine entsprechende Anzahl von Kolbenringen oder eine Folienummantelung (PTFE-Folie) aufzunehmen. Die Nuten 44 sind umfänglich in das Fügeteil 43 eingebracht, wobei die Fügeteile 45 wiederum einen symmetrischen Aufbau aufweisen können.

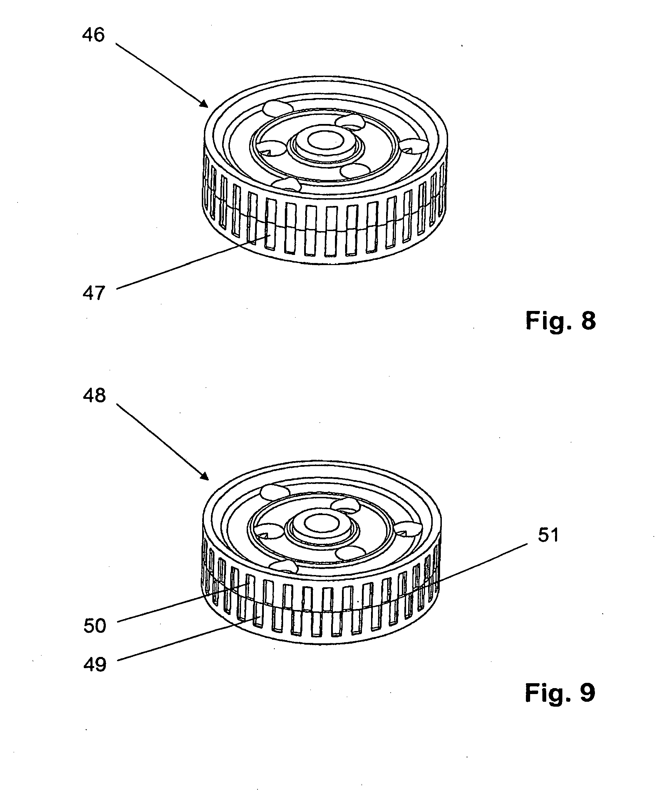

Eine weitere Ausführungsform eines Ventilbauteils 46 ist in einer dreidimensionalen Darstellung in der Fig. 8 wiedergegeben, auch ein derartiger Kolben wird bevorzugt mit einer manschettenförmigen Dichtung ausgestattet. In das Ventilbauteil 46 sind sich axial erstreckende Nuten 47 eingebracht, die in regelmäßigen Abständen und umfänglich in die äußere Umfangsfläche zur Aufnahme von Dichtprofilen eingebracht sind.

Die Fig. 9 zeigt wiederum eine alternative Ausführungsform eines Ventilbauteils 48 mit versetzt zueinander ausgerichteten Nuten 49, 50. Das Ventilbauteil 48 zeigt deutlich, dass eine geometrische Gestaltung des Ventilbauteils 48 und insbesondere die Ausbildung von Nuten in axialer wie auch horizontaler, das heißt entlang der Trennfläche bzw. Fügefläche 51 nicht beschränkt sind.

## Patentansprüche

1. Ventilbauteil (1, 12, 17, 29, 34, 43, 46, 48), insbesondere für einen Kolben oder ein Ventil, umfassend mindestens ein erstes scheibenförmiges Fügeteil (2, 3, 17, 24, 28, 33, 45) und mindestens ein zweites scheibenförmiges Fügeteil (2, 3, 17, 24, 28, 33, 45), wobei das erste und zweite Fügeteil (2, 3, 17, 24, 28, 33, 45) mindestens jeweils eine Öffnung (4, 5, 14, 15, 27, 37) aufweist, und wobei nach einem Fügen der Fügeteile (2, 3, 17, 24, 28, 33, 45) die Öffnungen (4, 5, 14, 15, 27, 37) der Fügeteile (2, 3, 17, 24, 28, 33, 45) derart zusammenwirken, dass ein Kanal (6, 16, 39), Insbesondere ein Durchströmkanal, gebildet ist und ein fluides Mittel, insbesondere ein Öl, durch den Kanal (6, 16, 39) hindurch strömbar ist, **dadurch gekennzeichnet, dass** die Fügeteile (2, 3, 17, 24, 28, 33, 45) mindestens teilweise um die Öffnungen (4, 5, 14, 15, 27, 37) und/oder ein gesamtes Fügeteil (2, 3, 17, 24, 28, 33, 45) herumreichende Erhöhungen (9, 19, 25, 30, 35) und Vertiefungen (10, 20, 26, 32, 36) umfassen, wobei die Erhöhungen (9, 19, 25, 30, 35) alternierend zu Vertiefungen (10, 20, 26, 32, 36) angeordnet sind und so in die Erhöhungen (9, 19, 25, 30, 35) und Vertiefungen (10, 20, 26, 32, 36) des Jeweiligen anderen Fügeteils (2, 3, 17, 24, 28, 33, 45) passen und die kooperlrenden Erhöhungen (9, 19, 25, 30, 35) und Vertiefungen (10, 20, 26, 32, 36) in den Fügeteilen (2, 3, 17, 24, 28, 33, 45) eine Dichtung bilden.

2. Ventilbauteil (1, 12, 17, 29, 34, 43, 46, 48) nach Anspruch 1, **dadurch gekennzeichnet, dass** zumindest zwei Öffnungen (4, 5, 14, 15, 27, 37) zur Bildung von mindestens zwei Kanälen (6, 16, 39) am Fügeteil (2, 3, 17, 24, 28, 33, 45) ausgebildet sind und jedes Fügeteil (2, 3, 17, 24, 28, 33, 45) Erhöhungen (9, 19, 25, 30, 35) und/oder Vertiefungen (10, 20, 26, 32, 36) aufweist.

3. Ventilbauteil (1, 12, 17, 29, 34, 43, 46, 48) nach einem der Ansprüche 1 oder 2, **dadurch gekennzeichnet, dass** die Erhöhungen (9, 19, 25, 30, 35) und/oder Vertiefungen (10, 20, 26, 32, 36) unmittelbar um die Öffnung (4, 5, 14, 15, 27, 37) herum im Fügeteil (2, 3, 17, 24, 28, 33, 45) angeordnet sind,

4. Ventilbauteil (1, 12, 17, 29, 34, 43, 46, 48) nach Anspruch 1 oder 2, **dadurch gekennzeichnet, dass** die Erhöhungen (9, 19, 25, 30, 35) und/oder Vertiefungen (10, 20, 26, 32, 36) vom Rand der Öffnung (4, 5, 14, 15, 27, 37) beabstandet in das Fügeteil (2, 3, 17, 24, 28, 33, 45) eingebracht sind.

5. Ventilbauteil (1, 12, 17, 29, 34, 43, 46, 48) nach einem der Ansprüche 1 bis 4, **dadurch gekennzeichnet, dass** die Öffnungen (4, 5, 14, 15, 27, 37) eine runde und/oder eckige und/oder ovale Querschnittsform aufweisen,

6. Ventilbauteil (1, 12, 17, 29, 34, 43, 46, 48) nach einem der Ansprüche 1 bis 5, **dadurch gekennzeichnet, dass** die gefügten scheibenförmigen Fügeteile (2, 3, 17, 24, 28, 33, 45) in einem gefügten Zustand an einer radial äußeren Oberfläche eine, insbesondere durch beide Fügeteile (2, 3, 17, 24, 28, 33, 45) gebildete, umlaufende Nut (8, 13, 31, 41, 44) aufweisen, wobei die Erhebungen und/oder Vertiefungen (10, 20, 26, 32, 36) In einem an die Nut (8, 13, 31, 41, 44) angrenzenden Bereich und umlaufend angeordnet sind, so dass die Nut (8, 13, 31, 41, 44) gegen den mindestens einen Kanal (6, 16, 39) abgedichtet ist.

7. Ventilbauteil (1, 12, 17, 29, 34, 43, 46, 48) nach einem der Ansprüche 1 bis 6, **dadurch gekennzeichnet, dass** die Nut (8, 13, 31, 41, 44) durch beide Fügeteile (2, 3, 17, 24, 28, 33, 45) gebildet Ist.

8. Ventilbauteil (1, 12, 17, 29, 34, 43, 46, 48) nach einem der Ansprüche 1 bis 7, **dadurch gekennzeichnet, dass** die Erhöhungen (9, 19, 25, 30, 35) und/oder Vertiefungen (10, 20, 26, 32, 36) eine Erstreckung von 0,5 mm bis 2 mm, vorzugsweise etwa 1 mm, aufweisen.

9. Ventilbauteil (1, 12, 17, 29, 34, 43, 46, 48) nach einem der Ansprüche 1 bis 8, **dadurch gekennzeichnet, dass** die Erhöhungen (9, 19, 25, 30, 35) und/oder Vertiefungen (10, 20, 26, 32, 36) mittels eines spanenden oder spanlosen Verfahrens hergestellt sind.

10. Ventilbauteil (1, 12, 17, 29, 34, 43, 46, 48) nach einem der Ansprüche 1 bis 9, **dadurch gekennzeichnet, dass** die Fügeteile (2, 3, 17, 24, 28, 33, 45) symmetrisch oder asymmetrisch ausgebildet sind.

11. Ventilbauteil (1, 12, 17, 29, 34, 43, 46, 48) nach einem der Ansprüche 1 bis 10, **dadurch gekennzeichnet, dass** die Fügeteile (2, 3, 17, 24, 28, 33, 45) und/oder Erhöhungen (9, 19, 25, 30, 35) und/oder Vertiefungen (10, 20, 26, 32, 36) derart ausgebildet sind, dass identische Fügeteile (2, 3, 17, 24, 28, 33, 45) fügbar sind.

12. Ventilbauteil (1, 12, 17, 29, 34, 43, 46, 48) nach einem der Ansprüche 1 bis 11, **dadurch gekennzeichnet, dass** die Erhöhung (9. 19, 25, 30, 35) und/oder Vertiefung (10, 20, 26, 32, 36) als verformbares, insbesondere plastische verformbares Fügeprofil ausgebildet ist.

13. Ventilbauteil (1, 12, 17, 29, 34, 43, 46, 48) nach Anspruch 12, **dadurch gekennzeichnet, dass** mindestens ein weiteres Fügeprofil in mindestens ein Fügeteil (2, 3, 17, 24, 28, 33, 45) eingebracht ist, so dass eine zusätzliche, die Fügeteile (2, 3, 17, 24, 28, 33, 45) festigende Verbindung der Fügeteile (2, 3, 17, 24, 28, 33, 45) ermöglicht ist.

14. Ventilbauteil (1, 12, 17, 29, 34, 43, 46, 48) nach einem der Ansprüche 1 bis 13, **dadurch gekennzeichnet, dass** das Fügeteil (2, 3, 17, 24, 28, 33, 45) ein pulvermetallurgisch hergestelltes Fügeteil (2, 3, 17, 24, 28, 33, 45), insbesondere ein Sinterteil, ist.

15. Verfahren zur Herstellung eines Ventilbauteils nach einem der Ansprüche 1 bis 14 umfassend die Verfahrenschritte Fertigen eines ersten und eines zweiten Fügeteils (2, 3, 17, 24, 28, 33, 45) mit mindestens einer Öffnung (4, 5, 14, 15, 27, 37) und mindestens einer Erhöhung (9, 19, 25, 30, 35) und/oder Vertiefung (10, 20, 26, 32, 36) und Fügen der Fügeteile (2, 3, 17, 24, 28, 33, 45) zur Bildung eines Kanals (6, 16, 39) aus den Öffnungen (4, 5, 14, 15, 27, 37) der Fügeteile (2, 3, 17, 24, 28, 33, 45), wobei mittels des Fügens mindestens eine Abdichtung des Kanals (6, 16, 39) durch die kooperierende Erhebung und/oder Vertiefung (10, 20, 26, 32, 36) erzielt wird.

16. Verfahren nach Anspruch 15, **dadurch gekennzeichnet, dass** während des Fügens zumindest ein Teil der kooperierenden Erhebungen und/oder Vertiefungen (10, 20, 26, 32, 36) der Fügeteile (2, 3, 17, 24, 28, 33, 45) verformt, insbesondere plastisch verformt wird.

17. Stoßdämpferkolben umfassend ein Ventilbauteil nach einem der Ansprüche 1 bis 14 und hergestellt gemäß einem der Verfahrensschritte 15 und 16.

## Claims

1. Valve component (1, 12, 17, 29, 34, 43, 46, 48), particularly for a piston or a valve, comprising at least one first joint member (2, 3, 17, 24, 28, 33, 45) and at least one second joint member (2, 3, 17, 24, 28, 33, 45), wherein said first and second joint members (2, 3, 17, 24, 28, 33, 45) each comprise at least one opening (4, 5, 14, 15, 27, 37), and wherein, after joining the joint members (2, 3, 17, 24, 28, 33, 45), the openings (4, 5, 14, 15, 27, 37) of the joint members (2, 3, 17, 24, 28, 33, 45) cooperate in such manner that a channel (6, 16, 39), particularly a flow-through channel, is formed and a fluidic medium, particularly an oil, is flowable through the channel (6, 16, 39), **characterized in that** the joint members (2, 3, 17, 24, 28, 33, 45) comprise raised portions (9, 19, 25, 30, 35) and deepened portions (10, 20, 26, 32, 36) at least partially extending around the openings (4, 5, 14, 15, 27, 37) and/or a full joint member (2, 3, 17, 24, 28, 33, 45), wherein the raised portions (9, 19, 25, 30, 35) are arranged alternatingly to the deepened portions (10, 20, 26, 32, 36) and thus fit into the raised portions (9, 19, 25, 30, 35) and deepened portions (10, 20, 26, 32, 36) of the respective other joint member (2, 3, 17, 24, 28, 33, 45), and the cooperating raised portions (9, 19, 25, 30, 35) and deepened portions (10, 20, 26, 32, 36) in the joint members (2, 3, 17, 24, 28, 33, 45) form a sealing.

2. Valve component (1, 12, 17, 29, 34, 43, 46, 48) according to claim 1, **characterized in that** at least two openings (4, 5, 14, 15, 27, 37) for forming at least two channels (6, 16, 39) are provided on the joint member (2, 3, 17, 24, 28, 33, 45) and each of the joint members (2, 3, 17, 24, 28, 33, 45) comprises raised portions (9, 19, 25, 30, 35) and/or deepened portions (10, 20, 26, 32, 36).

3. Valve component (1, 12, 17, 29, 34, 43, 46, 48) according to any one of claims 1 or 2, **characterized in that** the raised portions (9, 19, 25, 30, 35) and/or deepened portions (10, 20, 26, 32, 36) are arranged immediately around the opening (4, 5, 14, 15, 27, 37) in the joint member (2, 3, 17, 24, 28, 33, 45).

4. Valve component (1, 12, 17, 29, 34, 43, 46, 48) according to claim 1 or 2, **characterized in that** the raised portions (9, 19, 25, 30, 35) and/or deepened portions (10, 20, 26, 32, 36) are formed in the joint member (2, 3, 17, 24, 28, 33, 45) at a distance from the edge of the opening (4, 5, 14, 15, 27, 37).

5. Valve component (1, 12, 17, 29, 34, 43, 46, 48) according to any one of claims 1 to 4, **characterized in that** the openings (4, 5, 14, 15, 27, 37) have a round and/or angled and/or oval cross-sectional shape.

6. Valve component (1, 12, 17, 29, 34, 43, 46, 48) according to any one of claims 1 to 5, **characterized in that** the jointed disk-shaped joint members (2, 3, 17, 24, 28, 33, 45) in a jointed state comprise, at a radial outer surface, a peripheral groove (8, 13, 31, 41, 44) formed particularly by both joint members (2, 3, 17, 24, 28, 33, 45), wherein the raised portions and/or deepened portions (10, 20, 26, 32, 36) are arranged in an area adjacent to the groove (8, 13, 31, 41, 44) and in a circumferential manner so that the groove (8, 13, 31, 41, 44) is sealed against the at least one channel (6, 16, 39).

7. Valve component (1, 12, 17, 29, 34, 43, 46, 48) according to any one of claims 1 to 6, **characterized in that** the groove (8, 13, 31, 41, 44) is formed by both joint members (2, 3, 17, 24, 28, 33, 45).

8. Valve component (1, 12, 17, 29, 34, 43, 46, 48) according to any one of claims 1 to 7, **characterized in that** the raised portions (9, 19, 25, 30, 35) and/or deepened portions (10, 20, 26, 32, 36) have a dimension of 0.5 mm to 2 mm, particularly about 1 mm.

9. Valve component (1, 12, 17, 29, 34, 43, 46, 48) according to any one of claims 1 to 8, **characterized in that** the raised portions (9, 19, 25, 30, 35) and/or deepened portions (10, 20, 26, 32, 36) are produced by a machining or non-machining process.

10. Valve component (1, 12, 17, 29, 34, 43, 46, 48) according to any one of claims 1 to 9, **characterized in that** the joint members (2, 3, 17, 24, 28, 33, 45) are have a symmetrical or asymmetrical shape.

11. Valve component (1, 12, 17, 29, 34, 43, 46, 48) according to any one of claims 1 to 10, **characterized in that** the joint members (2, 3, 17, 24, 28, 33, 45) and/or raised portions (9, 19, 25, 30, 35) and/or deepened portions (10, 20, 26, 32, 36) are designed in such a manner that identical joint members (2, 3, 17, 24, 28, 33, 45) can be jointed.

12. Valve component (1, 12, 17, 29, 34, 43, 46, 48) according to any one of claims 1 to 11, **characterized in that** the raised portion (9, 19, 25, 30, 35) and/or deepened portion (10, 20, 26, 32, 36) is designed as a deformable, particularly plastically deformable joint profile.

13. Valve component (1, 12, 17, 29, 34, 43, 46, 48) according to claim 12, **characterized in that** at least one further joint profile is formed in at least one joint member (2, 3, 17, 24, 28, 33, 45), thus allowing for an additional connection of the joint members (2, 3, 17, 24, 28, 33, 45) strengthen the joint members (2, 3, 17, 24, 28, 33, 45).

14. Valve component (1, 12, 17, 29, 34, 43, 46, 48) according to any one of claims 1 to 13, **characterized in that** the joint member (2, 3, 17, 24, 28, 33, 45) is a powder-metallurgically produced joint member (2, 3, 17, 24, 28, 33, 45), particularly a sintered component.

15. Method for producing a valve component according to any one of claims 1 to 14, comprising the method steps: producing a first and a second joint member (2, 3, 17, 24, 28, 33, 45) having at least one opening (4, 5, 14, 15, 27, 37) and at least one raised portion (9, 19, 25, 30, 35) and/or deepened portion (10, 20, 26, 32, 36), and joining the joint members (2, 3, 17, 24, 28, 33, 45) for forming a channel (6, 16, 39) by the openings (4, 5, 14, 15, 27, 37) of the joint members (2, 3, 17, 24, 28, 33, 45), wherein, by the joining, at least one sealing of the channel (6, 16, 39) is generated by the cooperating raised portion and/or deepened portion (10, 20, 26, 32, 36).

16. Method according to claim 15, **characterized in that**, during the joining, at least a part of the cooperating raised portions and/or deepened portions (10, 20, 26, 32, 36) of the joint members (2, 3, 17, 24, 28, 33, 45) is deformed, particularly plastically deformed.

17. Shock absorber piston comprising a valve component according to any one of claims 1 to 14 and produced according to any one of method steps 15 and 16.

## Revendications

1. Composant de soupape (1, 12, 17, 29, 34, 43, 46, 48), en particulier pour un piston ou une soupape, comprenant au moins une première pièce de raccord en forme de disque (2, 3, 17, 24, 28, 33, 45) et au moins une deuxième pièce de raccord en forme de disque (2, 3, 17, 24, 28, 33, 45), étant entendu que les première et deuxième pièces de raccord (2, 3, 17, 24, 28, 33, 45) présentent chacune au moins une ouverture (4, 5, 14, 15, 27, 37) et étant entendu qu'après un raccord des pièces de raccord (2, 3, 17, 24, 28, 33, 45), les ouvertures (4, 5, 14, 15, 27, 37) des pièces de raccord (2, 3, 17, 24, 28, 33, 45) coopèrent de telle sorte qu'un canal (6, 16, 39), en particulier un canal de passage, est formé et qu'une substance fluide, en particulier une huile, peut circuler au travers du canal (6, 16, 39), **caractérisé en ce que** les pièces de raccord (2, 3, 17, 24, 28, 33, 45) comprennent des élévations (9, 19, 25, 30, 35) et des enfoncements (10, 20, 26, 32, 36) s'étendant au moins en partie autour des ouvertures (4, 5, 14, 15, 27, 37) et/ou d'une pièce de raccord commune (2, 3, 17, 24, 28, 33, 45), étant entendu que les élévations (9, 19, 25, 30, 35) sont agencées en alternance avec les enfoncements (10, 20, 26, 32, 36) et s'adaptent donc dans les élévations (9, 19, 25, 30, 35) et les enfoncements (10, 20, 26, 32, 36) de l'autre pièce de raccord (2, 3, 17, 24, 28, 33, 45) respective et que les élévations (9, 19, 25, 30, 35) et les enfoncements (10, 20, 26, 32, 36) en coopération forment un joint étanche dans les pièces de raccord (2, 3, 17, 24, 28, 33, 45).

2. Composant de soupape (1, 12, 17, 29, 34, 43, 46, 48) selon la revendication 1, **caractérisé en ce qu'**au moins deux ouvertures (4, 5, 14, 15, 27, 37) sont réalisées en vue de la formation d'au moins deux canaux (6, 16, 39) au niveau de la pièce de raccord (2, 3, 17, 24, 28, 33, 45) et **en ce que** chaque pièce de raccord (2, 3, 17, 24, 28, 33, 45) présente des élévations (9, 19, 25, 30, 35) et/ou des enfoncements (10, 20, 26, 32, 36).

3. Composant de soupape (1, 12, 17, 29, 34, 43, 46, 48) selon l'une des revendications 1 ou 2, **caractérisé en ce que** les élévations (9, 19, 25, 30, 35) et/ou les enfoncements (10, 20, 26, 32, 36) sont agencés directement autour de l'ouverture (4, 5, 14, 15, 27, 37) dans la pièce de raccord (2, 3, 17, 24, 28, 33, 45).

4. Composant de soupape (1, 12, 17, 29, 34, 43, 46, 48) selon la revendication 1 ou 2, **caractérisé en ce que** les élévations (9, 19, 25, 30, 35) et/ou les enfoncements (10, 20, 26, 32, 36) sont disposés à distance du bord de l'ouverture (4, 5, 14, 15, 27, 37) dans la pièce de raccord (2, 3, 17, 24, 28, 33, 45).

5. Composant de soupape (1, 12, 17, 29, 34, 43, 46, 48) selon l'une des revendications 1 à 4, **caractérisé en ce que** les ouvertures (4, 5, 14, 15, 27, 37) présentent une forme de section circulaire et/ou polygonale et/ou ovale.

6. Composant de soupape (1, 12, 17, 29, 34, 43, 46, 48) selon l'une des revendications 1 à 5, **caractérisé en ce que** les pièces de raccord en forme de disque (2, 3, 17, 24, 28, 33, 45) raccordées, dans un état raccordé, présentent au niveau d'une surface radialement extérieure une rainure périphérique (8, 13, 31, 41, 44), en particulier formée par deux pièces de raccord (2, 3, 17, 24, 28, 33, 45), étant entendu que les élévations et/ou les enfoncements (10, 20, 26, 32, 36) sont agencés dans une zone adjacente à la rainure (8, 13, 31, 41, 44) et de façon périphérique de telle sorte que la rainure (8, 13, 31, 41, 44) est rendue étanche par rapport à l'au moins un canal (6, 16, 39).

7. Composant de soupape (1, 12, 17, 29, 34, 43, 46, 48) selon l'une des revendications 1 à 6, **caractérisé en ce que** la rainure (8, 13, 31, 41, 44) est formée par deux pièces de raccord (2, 3, 17, 24, 28, 33, 45).

8. Composant de soupape (1, 12, 17, 29, 34, 43, 46, 48) selon l'une des revendications 1 à 7, **caractérisé en ce que** les élévations (9, 19, 25, 30, 35) et/ou les enfoncements (10, 20, 26, 32, 36) présentent une extension de 0,5 mm à 2 mm, et de préférence d'environ 1 mm.

9. Composant de soupape (1, 12, 17, 29, 34, 43, 46, 48) selon l'une des revendications 1 à 8, **caractérisé en ce que** les élévations (9, 19, 25, 30, 35) et/ou les enfoncements (10, 20, 26, 32, 36) sont réalisés au moyen d'un procédé d'usinage par enlèvement de matière ou sans enlèvement de matière.

10. Composant de soupape (1, 12, 17, 29, 34, 43, 46, 48) selon l'une des revendications 1 à 9, **caractérisé en ce que** les pièces de raccord (2, 3, 17, 24, 28, 33, 45) sont réalisées de façon symétrique ou asymétrique.

11. Composant de soupape (1, 12, 17, 29, 34, 43, 46, 48) selon l'une des revendications 1 à 10, **caractérisé en ce que** les pièces de raccord (2, 3, 17, 24, 28, 33, 45) et/ou les élévations (9, 19, 25, 30, 35) et/ou les enfoncements (10, 20, 26, 32, 36) sont réalisés de telle sorte que des pièces de raccord (2, 3, 17, 24, 28, 33, 45) identiques peuvent être raccordées.

12. Composant de soupape (1, 12, 17, 29, 34, 43, 46, 48) selon l'une des revendications 1 à 11, **caractérisé en ce que** l'élévation (9, 19, 25, 30, 35) et/ou l'enfoncement (10, 20, 26, 32, 36) est réalisé comme profilé de raccord déformable, en particulier déformable de manière plastique.

13. Composant de soupape (1, 12, 17, 29, 34, 43, 46, 48) selon la revendication 12, **caractérisé en ce qu'**au moins un profilé de raccord supplémentaire est inséré dans au moins une pièce de raccord (2, 3, 17, 24, 28, 33, 45) de telle sorte qu'un assemblage supplémentaire des pièces de raccord (2, 3, 17, 24, 28, 33, 45) fixant les pièces de raccord (2, 3, 17, 24, 28, 33, 45) est rendu possible.

14. Composant de soupape (1, 12, 17, 29, 34, 43, 46, 48) selon l'une des revendications 1 à 13, **caractérisé en ce que** la pièce de raccord (2, 3, 17, 24, 28, 33, 45) est une pièce de raccord (2, 3, 17, 24, 28, 33, 45) réalisée selon la métallurgie des poudres, en particulier une pièce frittée.

15. Procédé de réalisation d'un composant de soupape selon l'une des revendications 1 à 14, comprenant les étapes de procédé consistant à fabriquer une première et une deuxième pièce de raccord (2, 3, 17, 24, 28, 33, 45) avec au moins une ouverture (4, 5, 14, 15, 27, 37) et au moins une élévation (9, 19, 25, 30, 35) et/ou un enfoncement (10, 20, 26, 32, 36) et à raccorder les pièces de raccord (2, 3, 17, 24, 28, 33, 45) afin de former un canal (6, 16, 39) à partir des ouvertures (4, 5, 14, 15, 27, 37) des pièces de raccord (2, 3, 17, 24, 28, 33, 45), étant entendu qu'au moyen du raccordement, au moins une étanchéification du canal (6, 16, 39) est obtenue du fait de l'élévation et/ou de l'enfoncement (10, 20, 26, 32, 36) en coopération.

16. Procédé selon la revendication 15, **caractérisé en ce que** pendant le raccordement, au moins une partie des élévations et/ou des enfoncements (10, 20, 26, 32, 36) en coopération des pièces de raccord (2, 3, 17, 24, 28, 33, 45) est déformée, en particulier déformée de manière plastique.

17. Piston d'amortisseur comprenant un composant de soupape selon l'une des revendications 1 à 14 et réalisé conformément à l'une des étapes de procédé 15 et 16.
